# DEMANDE DE BREVET EUROPEEN

(11) **EP 4 679 291 A1**
(43) Date de publication de la demande: **14.01.2026**
(21) Numéro de dépôt: 25185380.0
(22) Date de dépôt: 26.06.2025
(51) Int. Cl.: G06F 16/901

(54) **PROCEDE DE COMMUNICATION AVEC UN DISPOSITIF INFORMATIQUE COMPRENANT UNE BASE DE CONNAISSANCES**

(30) Priorité: 09.07.2024 FR 2407457
(71) Demandeur: Orange, 92130 Issy-les-Moulineaux (FR)
(72) Inventeur: CHABOT, Yoan, 92326 Chatillon (FR); DEUZÉ, Frédéric, 92326 Chatillon (FR)

(57) **Abrégé**

L'invention concerne un procédé de communication avec un dispositif informatique (DI) comprenant une base de connaissances (BC) modélisant des données sous la forme d'un graphe de connaissances (GC), ledit procédé comprenant ce qui suit, au niveau dudit dispositif :
- recevoir (S1b) une première requête (REQ1) comprenant des informations relatives à une entité (ENT) du graphe de connaissances,
- commander (S2) la restitution d'une page Web contenant lesdites informations,
- recevoir (S3b) une deuxième requête (REQ2) demandant au moins une propriété manquante de ladite entité, parmi lesdites informations restituées,
- commander (S4) la restitution d'une page Web contenant une liste de propriétés manquantes classées par fréquence d'observation de ces propriétés pour d'autres entités du même type,
- interroger (S5-S7) un modèle de langage, à partir d'un prompt généré en langage naturel par ledit dispositif, ledit prompt demandant au modèle de langage quelle est la valeur (V) d'au moins une des propriétés de la liste,
- commander (S8) la restitution d'une page Web contenant ladite valeur.

## Description

### Domaine de l'invention

Le domaine de l'invention est celui de l'interrogation des bases de données. Plus précisément, la présente invention porte sur un procédé de communication avec un dispositif informatique (ordinateur, serveur, plateforme, etc.) comprenant une base de connaissances modélisant des données sous la forme d'un graphe de connaissances, à des fins d'enrichissement des informations contenues dans le graphe de connaissances. La présente invention porte également sur le dispositif informatique, un programme informatique et un support d'enregistrement correspondants.

### Art antérieur

Parmi les techniques de construction de graphes de connaissances, la construction collaborative faisant appel à des contributeurs humains reste importante à l'image par exemple du graphe de connaissances Wikidata faisant référence pour de nombreux domaines et cas d'utilisation. Cette construction collaborative est aujourd'hui réalisée principalement manuellement, ce qui rend le travail de construction du graphe long et fastidieux, particulièrement lorsque les domaines de connaissances sont vastes. En outre, les informations du graphe de connaissances issues de cette construction manuelle peuvent s'avérer ne pas toujours être fiables et légitimes.

Il existe également des techniques d'enrichissement de graphes de connaissances à l'aide de systèmes d'intelligence artificielle générative de type modèle de langage large. Les modèles de langage sont interrogés à l'aide d'un prompt pour récupérer des connaissances manquantes dans un graphe de connaissances, pour une entité à enrichir du graphe de connaissances. Toutefois, une telle technique nécessite l'envoi tous azimuts de requêtes vers le modèle de langage, sans préconception des propriétés désirables pour l'entité à enrichir. L'utilisation de modèle de langage lors de la mise en œuvre d'une telle technique se révèle donc très coûteuse car elle requiert de nombreuses inférences pour générer des propriétés manquantes qui ne sont pas nécessairement pertinentes pour l'entité à enrichir. Il en résulte que les informations qui viennent enrichir le graphe de connaissance soient parfois inexactes et incohérentes, ce qui nuit grandement à la fiabilité de cette technique d'enrichissement.

### Objet et résumé de l'invention

Un des buts de l'invention est de remédier à au moins un des inconvénients de l'état de la technique précité en proposant une nouvelle technique d'enrichissement d'un graphe de connaissances qui soit plus performante, notamment d'un point de vue coût en ressources calculatoires et consommation énergétique, et diminution des hallucinations.

A cet effet, un objet de la présente invention concerne un procédé de communication avec un dispositif informatique comprenant une base de connaissances modélisant des données sous la forme d'un graphe de connaissances, un tel procédé comprenant ce qui suit, au niveau du dispositif :
- recevoir une première requête comprenant des informations relatives à une entité du graphe de connaissances,
- commander la restitution d'une page Web contenant lesdites informations,
- recevoir une deuxième requête demandant au moins une propriété manquante de l'entité, parmi lesdites informations restituées,
- commander la restitution d'une page Web contenant une liste de propriétés manquantes classées par fréquence d'observation de ces propriétés pour d'autres entités du même type,
- interroger un modèle de langage, à partir d'un prompt généré en langage naturel par le dispositif, le prompt demandant au modèle de langage quelle est la valeur d'au moins une des propriétés de la liste,
- commander la restitution d'une page Web contenant cette valeur.

L'invention permet, lors de la phase d'enrichissement d'un graphe de connaissances, de générer automatiquement par le dispositif informatique, à destination d'un modèle de langage, un ou plusieurs prompts adaptés et ciblés, de tels prompts n'étant générés que par rapport à des propriétés manquantes qui ont été identifiées préalablement comme pertinentes pour l'entité, limitant ainsi les risques d'hallucinations vis-à-vis de propriétés non pertinentes pour cette entité. Grâce à l'utilisation d'un tel modèle de langage :
- le nombre d'opérations humaines pour enrichir un graphe de connaissances est fortement limité comparativement aux solutions de l'art antérieur d'enrichissement collaboratif des graphes de connaissances, ce qui permet de réduire les erreurs pouvant se produire lors de l'enrichissement, d'alléger la tâche des utilisateurs et d'accélérer la phase d'enrichissement,
- de diminuer fortement le nombre d'inférences générées par le dispositif informatique pour générer des propriétés, qui, dans le cas de certaines solutions de l'art antérieur basées sur des outils d'IA générative, ne sont pas nécessairement pertinentes pour l'entité à enrichir car résultant d'un envoi de nombreuses requêtes sans aucune connaissances préalable des propriétés désirables pour l'entité à enrichir.

L'invention permet ainsi de proposer une technique d'enrichissement de graphe de connaissances plus performante car plus rapide, moins coûteuse, et moins énergivore que les techniques d'enrichissement de graphe de connaissances classiques.

Selon un mode de réalisation particulier, le prompt est généré pour un nombre de propriétés de la liste qui est déterminé par rapport à un seuil de fréquence d'observation de ces propriétés dans la base de connaissances, pour au moins une autre entité du même type que l'entité.

Compte tenu du fait que les prompts sont générés pour un nombre de propriétés déterminé par rapport à un seuil de fréquence d'observation requis, le modèle de langage est ainsi utilisé de manière plus limitée, puisque moins de prompts seront générés par le dispositif informatique, ce qui permet d'optimiser la réduction de l'empreinte énergétique et le coût de la technique d'enrichissement de l'invention. Selon un autre mode de réalisation particulier, le seuil de fréquence d'observation est défini préalablement à la mise en œuvre du procédé de communication ou est contenu dans une troisième requête reçue par le dispositif, en réponse à la restitution de la page Web contenant la liste de propriétés manquantes.

Un tel mode de réalisation permet d'enrichir un graphe connaissances de manière adaptative et personnalisable par un utilisateur du dispositif informatique.

Selon un autre mode de réalisation particulier, le procédé de communication comprend ce qui suit :
- recevoir une sélection d'une validation ou d'une non-validation de ladite valeur contenue dans la page Web restituée à l'aide d'une interface homme-machine,
- ajouter ladite valeur au graphe de connaissances, en association avec ladite entité, si la validation de la valeur est demandée.

Un tel mode de réalisation permet de proposer à un utilisateur du dispositif informatique une interface d'enrichissement simplifiée qui facilite grandement les opérations manuelles d'enrichissement d'un graphe de connaissances.

Selon un autre mode de réalisation particulier, ladite valeur est relative à une propriété de données ou à une propriété d'objet.

Un tel mode de réalisation permet d'enrichir le graphe de connaissances avec des données de différentes natures, ce qui permet d'enrichir un graphe de connaissances de manière précise et complète.

Les différents modes ou caractéristiques de réalisation précités peuvent être ajoutés indépendamment ou en combinaison les uns avec les autres, au procédé de communication tel que défini ci-dessus.

L'invention concerne également un dispositif informatique comprenant une base de connaissances modélisant des données sous la forme d'un graphe de connaissances, le dispositif étant caractérisé en ce qu'il est configuré pour mettre en œuvre :
- une réception d'une première requête comprenant des informations relatives à une entité du graphe de connaissances,
- une commande de la restitution d'une page Web contenant lesdites informations,
- une réception d'une deuxième requête demandant au moins une propriété manquante de ladite entité, parmi lesdites informations restituées,
- une commande de la restitution d'une page Web contenant une liste de propriétés manquantes classées par fréquence d'observation de ces propriétés pour d'autres entités du même type,
- une interrogation d'un modèle de langage, à partir d'un prompt généré en langage naturel par ledit dispositif, ledit prompt demandant au modèle de langage quelle est la valeur d'au moins une des propriétés de la liste,
- une commande de la restitution d'une page Web contenant ladite valeur.

Un tel dispositif est notamment configuré pour mettre en œuvre le procédé de communication précité, selon l'un ou l'autre de ses modes de réalisation. L'invention concerne également un programme d'ordinateur comportant des instructions pour la mise en œuvre du procédé de communication conforme à l'invention, selon l'un quelconque des modes particuliers de réalisation décrits précédemment, lorsque ledit programme est exécuté par un processeur.

De telles instructions peuvent être stockées durablement dans un support mémoire non transitoire du dispositif informatique mettant en œuvre le procédé de communication selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile, un disque dur ou un SSD.

D'autre part, le support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par un exemple un réseau de type Internet. Alternativement, le support d'enregistrement peut être un circuit intégré dans lequel le programme est incorporé, le circuit étant adapté pour exécuter ou pour être utilisé dans l'exécution du procédé de communication précité.

Selon un exemple de réalisation, la présente technique est mise en œuvre au moyen de composants logiciels et/ou matériels. Dans cette optique, le terme « dispositif » ou « module » peut correspondre dans ce document aussi bien à un composant logiciel, qu'à un composant matériel ou à un ensemble de composants matériels et logiciels.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
[Fig. 1] La figure 1 représente une architecture dans laquelle est mis en œuvre le procédé de communication, selon un mode de réalisation particulier de l'invention,
[Fig. 2] La figure 2 représente un dispositif informatique selon un mode de réalisation particulier de l'invention, tel que mis en œuvre dans l'architecture de la figure 1,
[Fig. 3A] La figure 3A représente les principales actions mises en œuvre dans le procédé de communication, selon un mode de réalisation particulier de l'invention, tel que mis en œuvre dans l'architecture de la figure 1,
[Fig. 3B] La figure 3B représente les principales actions mises en œuvre dans le procédé de communication, selon un mode de réalisation particulier de l'invention, tel que mis en œuvre dans l'architecture de la figure 1,
[Fig. 4] La figure 4 représente un exemple de page Web générée lors de la mise en œuvre du procédé de communication, selon un mode de réalisation particulier de l'invention,
[Fig. 5] La figure 5 représente un exemple de page Web générée lors de la mise en œuvre du procédé de communication, selon un mode de réalisation particulier de l'invention,
[Fig. 6] La figure 6 représente les principales actions mises en œuvre lors d'une phase d'enrichissement de données du procédé de communication, selon un mode de réalisation particulier de l'invention, tel que mis en œuvre dans l'architecture de la figure 1.

### Description détaillée d'un mode de réalisation de l'invention

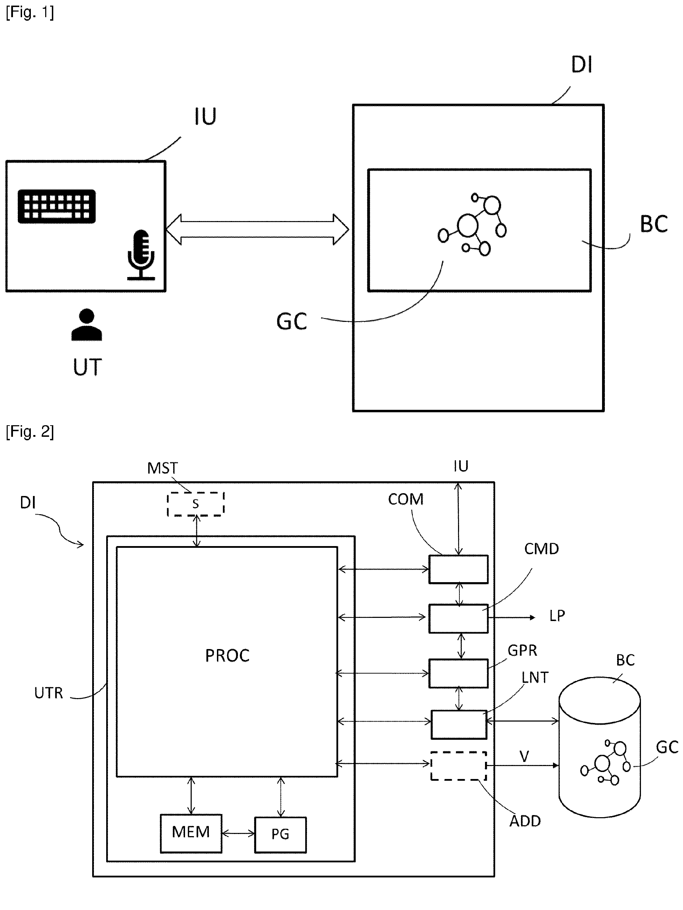

La figure 1 représente une architecture dans laquelle est mis en œuvre un procédé de communication, selon un mode de réalisation de l'invention.

Une telle architecture comprend :
- un dispositif informatique DI comprenant une base de connaissances BC modélisant des données sous la forme d'un graphe de connaissances GC ;
- une interface homme-machine IU configurée pour être activée par un utilisateur UT pour communiquer avec le dispositif informatique DI.

Le dispositif informatique DI peut comprendre par exemple un ordinateur, un serveur, une plateforme, etc.

Sur la figure 1, la base de connaissances BC est intégrée au dispositif informatique DI. Bien entendu, une telle base de connaissances BC peut être séparée du dispositif informatique DI, ce dernier étant alors configuré pour dialoguer avec la base de connaissances BC par tout moyen de communication adapté.

L'interface IU peut comprendre par exemple une interface graphique textuelle ou un capteur sonore couplé à une interface de reconnaissance vocale. Une telle interface peut appartenir au dispositif informatique DI ou être séparée de ce dernier. Le graphe connaissances GC est par exemple du type Wikidata, DBpedia, Google Knowledge Graph, Microsoft Concept Graph, etc.

On va maintenant décrire, en référence à la figure 2, la structure simplifiée du dispositif informatique DI.

Selon l'invention, le dispositif informatique DI comprend :
- un module de communication COM configuré pour recevoir des requêtes générées à l'aide de l'interface IU,
- un module de commande CMD configuré pour commander la restitution de réponses aux requêtes générées,
- un module de génération de prompt GPR configuré pour générer un prompt en langage naturel,
- un modèle de langage naturel LNT configuré pour être interrogé à partir du prompt généré. Un tel modèle de langage naturel peut être par exemple un modèle n-grams, un réseau de neurones récurrent RNN (« Recurrent Neural Network » en anglais), un grand modèle de langage LLM (« Large Language Model » en anglais), etc. Le modèle de langage naturel LNT a été classiquement entrainé pour engranger des connaissances.

Selon l'invention :
- le module de communication COM est configuré pour recevoir notamment une requête REQ1 générée à l'aide de l'interface IU, ladite requête comprenant des informations relatives à une entité du graphe de connaissances GC.

Une entité peut être par exemple le nom d'un objet, d'une personne, d'une entreprise, etc.,
- le module de commande CMD est configuré pour notamment commander la restitution d'une page Web comprenant les informations demandées dans la requête REQ1.

Également selon l'invention :
- le module de communication COM est configuré pour recevoir notamment une requête REQ2 générée à l'aide de l'interface IU, la requête REQ2 demandant au moins une propriété manquante ou désirable de ladite entité, parmi les informations restituées,
- le module de commande CMD est configuré pour notamment commander la restitution d'une page Web contenant une liste LP de propriétés manquantes classées par fréquence d'observation de ces propriétés pour d'autres entités du même type que ladite entité.

Les informations relatives à l'entité qui sont contenues dans la requête REQ1 peuvent comprendre en langage naturel le nom de l'entité saisi manuellement ou prononcé par l'utilisateur UT au moyen de l'interface IU. Alternativement, la requête REQ1 peut être écrite dans un langage informatique, par exemple de type SQL (« Structured Query Language » en anglais), Python, etc.

Selon l'invention :
- le module de génération de prompt GPR est configuré pour générer automatiquement, c'est-à-dire sans intervention de l'utilisateur UT, un prompt demandant la valeur d'au moins une des propriétés manquantes de la liste LP qui a été restituée à l'aide du module de commande CMD,
- le modèle de langage naturel LNT est configuré pour être interrogé à partir de ce prompt généré,
- le module de commande CMD est notamment configuré pour commander la restitution d'une page Web contenant une valeur V de ladite au moins une propriété manquante.

De manière optionnelle, selon l'invention, le module de communication COM est configuré pour recevoir, en réponse à la restitution d'une page Web contenant une liste LP de propriétés manquantes classées par fréquence d'observation de ces propriétés pour d'autres entités du même type que ladite entité, une requête REQ3 générée à l'aide de l'interface IU, ladite requête REQ3 contenant un seuil de fréquence d'observation de ces propriétés dans la base de connaissances.

De manière optionnelle, selon l'invention, le dispositif informatique DI peut comprendre un module de stockage MST dans lequel est enregistré un seuil TH de fréquence d'observation des propriétés manquantes dans la base de connaissances BC. Un tel module de stockage MST étant optionnel, il est représenté en pointillés sur la figure 2.

Selon l'invention, le dispositif informatique DI peut comprendre un module d'ajout ADD qui est configuré pour ajouter la valeur V de ladite au moins une propriété manquante au graphe de connaissances GC. Le module ADD étant optionnel, il est représenté en pointillés sur la figure 2.

Selon l'invention, le module de communication COM peut être configuré pour notamment recevoir une requête REQ4 demandant la validation ou la non-validation de la valeur de ladite au moins une propriété manquante.

A l'initialisation, les instructions de code du programme d'ordinateur PG sont par exemple chargées dans une mémoire RAM (non représentée) avant d'être exécutées par le processeur PROC. Le processeur PROC de l'unité de traitement UTR met notamment en œuvre les actions suivantes, dans le cadre du procédé de communication qui va être décrit ci-dessous, selon les instructions du programme d'ordinateur PG :
- recevoir la requête REQ1 comprenant des informations relatives à une entité du graphe de connaissances,
- commander la restitution d'une page Web contenant lesdites informations,
- recevoir la requête REQ2 demandant au moins une propriété manquante de ladite entité, parmi lesdites informations restituées,
- commander la restitution d'une page Web contenant une liste de propriétés manquantes classées par fréquence d'observation de ces propriétés pour d'autres entités du même type,
- interroger le modèle de langage LNT à partir du prompt généré en langage naturel, ledit prompt demandant au modèle de langage quelle est la valeur V d'au moins une des propriétés de la liste,
- commander la restitution d'une page Web contenant ladite valeur V,
- éventuellement ajouter la valeur V de ladite au moins une propriété manquante au graphe de connaissances GC,
- éventuellement recevoir la requête REQ3 contenant un seuil de fréquence d'observation des propriétés manquantes dans la base de connaissances,
- éventuellement enregistrer le seuil TH de fréquence d'observation des propriétés manquantes dans la base de connaissances BC,
- éventuellement recevoir la requête REQ4 demandant la validation ou la non-validation de la valeur de ladite au moins une propriété manquante.

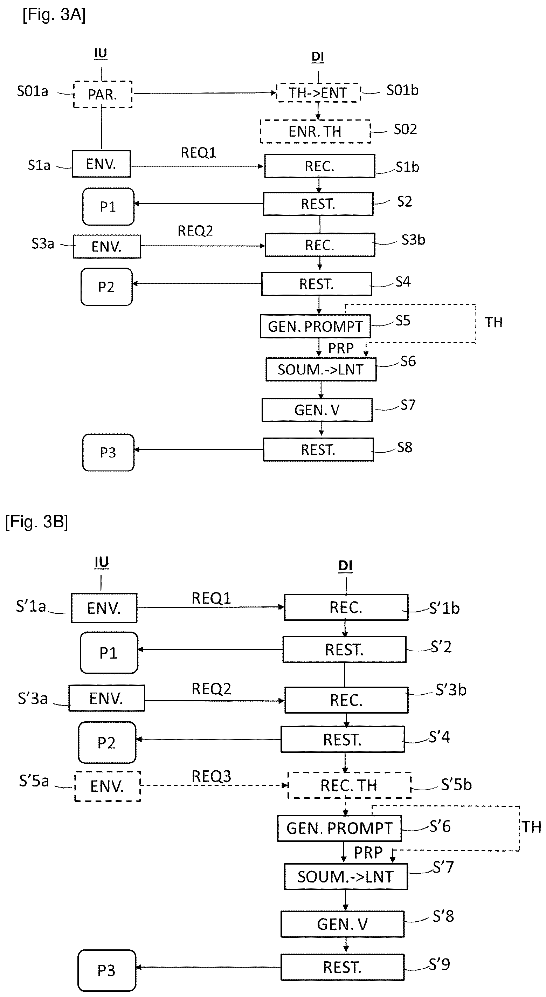

On décrit maintenant, en relation avec la figure 3A, ensemble les figures 1 et 2, le déroulement d'un procédé de communication avec le dispositif informatique DI, selon un premier mode de réalisation particulier de l'invention.

Au cours d'une étape préalable optionnelle S01, l'utilisateur UT paramètre le dispositif informatique DI en fixant, pour une entité ENT du graphe de connaissances GC, recherchée par l'utilisateur UT, un seuil TH de fréquence d'observation des propriétés manquantes de cette entité dans la base de connaissances BC, pour au moins une autre entité du même type que cette entité. A cet effet, à l'aide de l'interface IU, l'utilisateur UT saisit le seuil TH, par exemple 50%, ou prononce vocalement le seuil TH.

Au cours d'une étape préalable optionnelle S02, le seuil TH est enregistré dans la mémoire MST du dispositif informatique DI.

Les étapes S01 et S02 étant optionnelles, elles sont représentées en pointillés sur la figure 3A.

Au cours d'une étape S1a, l'utilisateur UT envoie une requête REQ1 au graphe de connaissances GC, via l'interface IU, ladite requête REQ1 comprenant des informations relatives à l'entité ENT du graphe de connaissances GC. Cette requête est reçue en S1b par le dispositif informatique DI, via son module COM.

Les informations contenues dans la requête REQ1 peuvent comprendre un ou plusieurs mots. Une telle requête peut être écrite en langage naturel ou dans un langage informatique particulier, par exemple de type SQL (« Structured Query Language » en anglais), Python, etc.

Dans un exemple de réalisation, la requête REQ1 comprend le mot « Iphone 6S », désignant l'entité ENT « Iphone 6S ».

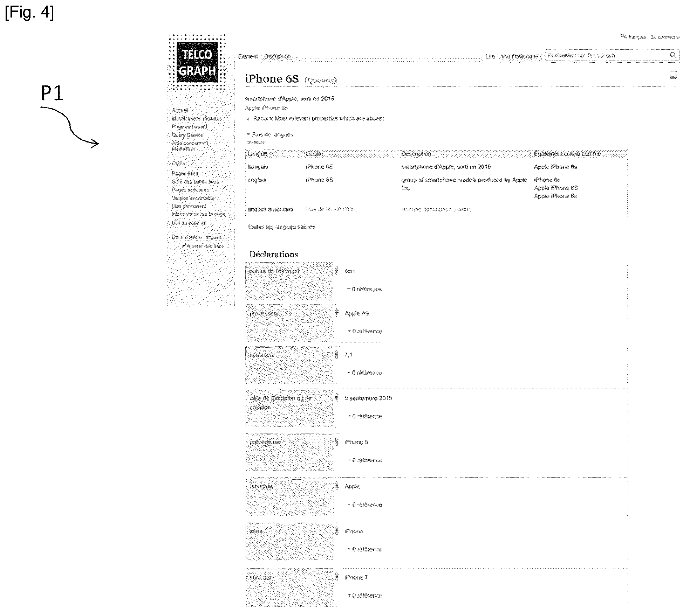

Au cours d'une étape S2, le module de commande CMD du dispositif informatique DI commande la restitution d'une page Web P1 contenant des informations relatives à l'entité ENT requise. Dans l'exemple représenté sur la figure 4, la page Web P1 contient les informations relatives à l'entité « Iphone 6S » qui contient un identifiant unique au sein du graphe de connaissances GC, Q60903, dans l'exemple représenté. Plusieurs triplets de connaissances concernent cette entité. Un triplet de connaissances est un ensemble de trois éléments <sujet, propriété, objet>. Dans l'exemple de la figure 4, <IPhone 6S (Q60903), processeur, Apple A9> est un triplet de connaissances liant un sujet « IPhone 6S », une propriété « processeur » et un objet « Apple A9 ». Par la suite, deux types de propriétés sont distinguées :
- les propriétés d'objets liant une entité à une autre par l'intermédiaire d'une propriété. Par exemple, La propriété « processeur » est une propriété d'objet liant l'entité « IPhone 6S » à l'entité « Apple A9 », elle-même représentée par un identifiant unique dans le graphe de connaissances GC,
- les propriétés de données liant une entité à une valeur par l'intermédiaire d'une propriété. Par exemple, la propriété « épaisseur » est une propriété de données attribuant la valeur 7,1 à l'entité « IPhone 6S ». Les valeurs peuvent être de différents types : numérique, date, chaîne de caractères, etc.

Au cours d'une étape S3a, l'utilisateur UT envoie une requête REQ2 au graphe de connaissances GC, via l'interface IU, ladite requête REQ2 demandant au moins une propriété manquante de l'entité ENT, parmi lesdites informations restituées en S2. Cette requête est reçue en S3b par le dispositif informatique DI, via son module COM.

De façon connue en soi, l'utilisateur UT active un outil d'analyse de graphes de connaissances qui permet, pour une entité donnée, de calculer un taux de complétude de l'entité relativement aux entités du même type (au sens type sémantique dans le graphe de connaissances) et d'identifier les propriétés manquantes couramment observés pour ce type. Le type d'une entité fait ici référence à un triplet de connaissances permettant de « classer » l'entité dans une ou plusieurs catégories sémantiques via une propriété spécifique de typage, par exemple « nature de l'élément » sur la figure 4. La propriété « nature de l'élément » sur la figure 4 lie l'entité « IPhone 6S » au type « item ». L'entité « IPhone 6S » aurait également pu être typée avec l'entité « Téléphone mobile » par exemple.

Un exemple d'un tel outil est par exemple l'extension RECOIN (https://www.wikidata.org/wiki/Wikidata:Recoin) de Wikidata, qui permet, à l'aide de calculs de fréquences d'apparition des propriétés, de lister des propriétés désirables ou manquantes pour une entité donnée.

Un autre exemple d'un tel outil est l'outil Wiki2Prop décrit dans le document « Wiki2Prop: A Multimodal Approach for Predicting Wikidata Properties from Wikipedia », WWW '21: The Web Conference 2021, Virtual Event / Ljubljana, Slovenia, April 19-23, 2021, qui permet de proposer des nouvelles propriétés pour une entité sur la base de sa page Wikipedia associée. Comme décrit dans ce document, l'identification de propriétés désirables pour une entité est réalisée à l'aide d'une analyse du graphe de connaissances. Etant donné une entité et son type (encodés dans le graphe de connaissances), l'outil calcule les fréquences des propriétés instanciées et observées sur les entités du graphe de connaissances de même type. Sur la base de ce calcul, l'outil génère en sortie un taux de complétude de l'entité comparativement aux entités du même type ainsi qu'une liste de propriétés classées par fréquence d'observation chez les autres entités du même type.

Au cours d'une étape S4, le module de commande CMD du dispositif informatique DI commande la restitution d'une page Web P2 contenant une liste de propriétés manquantes classées par fréquence d'observation de ces propriétés pour d'autres entités du même type, allant de 60% à 10% dans l'exemple représenté.

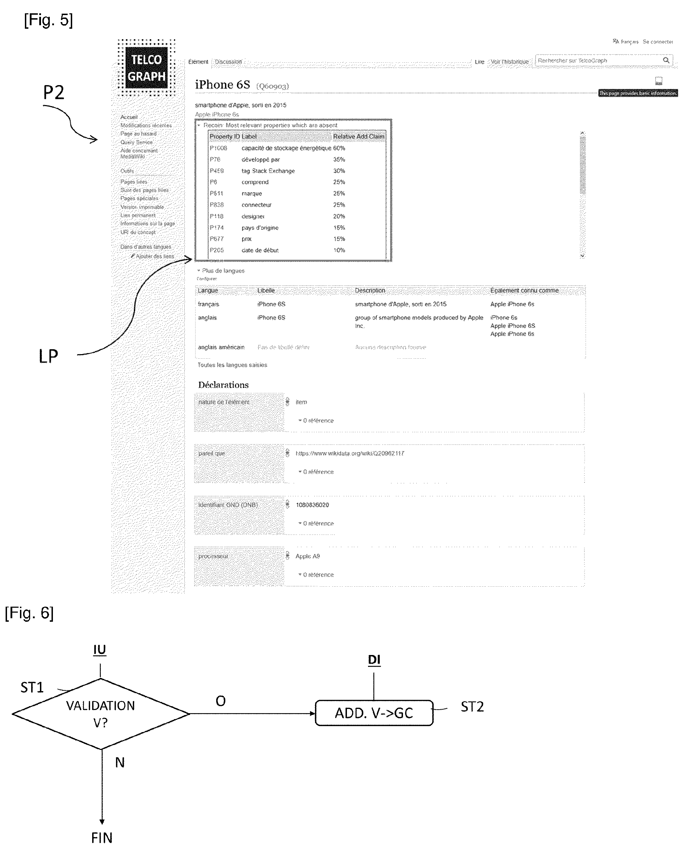

Un exemple d'une telle page Web P2 est représenté sur la figure 5, dans le cas de de l'entité « Iphone 6S ». Dans l'exemple représenté, une liste LP de dix propriétés manquantes est générée, chaque propriété de cette liste étant associée à un identifiant ID dans le graphe de connaissances et une fréquence d'observation estimée en pourcentage.

Bien entendu, cet exemple n'est pas exhaustif. Dans un autre exemple non représenté, selon l'entité à rechercher dans le graphe de connaissances GC, une seule propriété pourrait être générée en association avec son identification ID et sa fréquence d'observation.

Au cours d'une étape S5, le module de génération de prompt GPR génère automatiquement un prompt PRP demandant la valeur d'au moins une des propriétés de la liste qui a été restituée dans la page Web P2. Un tel prompt PRP est par exemple une phrase en langage naturel du type : « « Quelle est la valeur de la propriété PROPRIÉTÉ DÉSIRABLE pour l'entité ENT À COMPLÉTER ? Donne uniquement la valeur trouvée. ». Davantage d'informations contextuelles peuvent être ajoutées dans le prompt PRP en tant que « contexte » pour guider la génération de données par le modèle en langage LNT. De telles informations contextuelles peuvent par exemple être ajoutées à l'aide d'une méthode bien connue dite de « prompt engineering ». Il s'agit d'une méthode visant à enrichir et structurer le prompt afin d'augmenter la précision et la qualité des résultats fournis par le modèle de langage LNT. Dans l'exemple représenté sur les figures 4 et 5, il pourrait par exemple être envisagé de donner davantage de contexte au modèle de langage LNT en insérant dans le prompt PRP, en tant que contexte, des fragments de documents textuels traitant du sujet « IPhone 6S ». Il pourrait être également envisagé par exemple d'ajouter manuellement dans le prompt des contraintes basées sur la connaissance que l'utilisateur UT a du graphe de connaissances GC. Par exemple, dans le cas de la propriété « capacité de stockage énergétique », l'utilisateur UT peut utiliser ses connaissances apriori sur cette propriété particulière (connaissances provenant du graphe de connaissances). Dans le cas où par exemple la cible « a pour unité milliAmpère heure (mAh) » de la propriété « capacité de stockage énergétique » n'a pas été encodée dans le graphe de connaissance GC, l'utilisateur UT pourrait par exemple préciser dans le prompt PRP qu'une réponse ayant pour unité milliAmpère heure (mAh) est attendue.

Au cours d'une étape S6, le prompt PRP est soumis au modèle de langage LNT qui génère, au cours d'une étape S7, pour chacune des propriétés de la liste LP, une valeur correspondante V, 10 valeurs dans l'exemple représenté sur la figure 5. Selon le type de propriétés manquantes, la valeur V générée concerne une propriété de données ou bien une propriété de valeurs.

Lorsque la valeur générée concerne une propriété de données, il n'est pas nécessaire de mettre en œuvre un post-traitement particulier si ce n'est un formatage pour se conformer au format attendu par le graphe de connaissances GC (format de date particulier par exemple). Par exemple, dans le cas de la propriété « capacité de stockage énergétique », le modèle de langage LNT peut générer la valeur V « 1715 (mAh) » ne nécessitant pas de traitements supplémentaires pour être ajoutée éventuellement par la suite dans le graphe de connaissances GC.

Lorsque la valeur générée concerne une propriété d'objets, une étape de liaison d'entités (« entity linking » en anglais) bien connue est mise en œuvre afin de transformer la chaîne de caractères représentant une entité ENT en identifiant d'entité connu de la base de connaissances BC. Par exemple, dans le cas où le prompt demande une valeur V pour la propriété « développé par » illustrée sur la figure 5, le modèle de langage LNT pourrait répondre avec une chaîne de caractères « Apple ». Cette chaîne de caractères n'est pas utilisable en l'état car elle est ambiguë. En effet, il est impossible de savoir si cette chaîne de caractères fait référence à un fruit, un nom d'entreprise ou autres. En outre, cette chaîne de caractères ne correspond pas à un identifiant d'entité dans le graphe de connaissances GC. Cela justifie la nécessité de passer par une étape de désambiguïsation, autrement dit choisir le sens correct de l'entité par rapport au contexte, et d'entity linking, c'est-à-dire retrouver l'identifiant, dans le graphe de connaissances GC, de l'entité correspondant à la mention textuelle « Apple ».

Au cours d'une étape S8, le module de commande CMD du dispositif informatique DI commande la restitution d'une page Web P3 contenant la valeur V d'au moins une des propriétés manquantes de la liste LP, par exemple celle pour laquelle la fréquence d'observation est la plus élevée dans la liste LP. Alternativement, dans l'exemple de la figure 5, la page Web P3 peut contenir les dix valeurs V associées respectivement aux dix propriétés manquantes. Selon un autre exemple non exhaustif, dix pages Web P3, contenant chacune une valeur V d'une propriété manquante parmi les dix, peuvent être restituées successivement en S8.

Selon un mode de réalisation de l'invention, dans le cas où les étapes S01a, S01b, S02 de paramétrage d'un seuil TH de la fréquence d'observation ont été mises en œuvre, le prompt PRP généré en S5 ne demande que les valeurs des propriétés manquantes pour lesquelles la fréquence d'observation est supérieure ou égale ou bien strictement supérieur au seuil TH qui, dans l'exemple précité, est de 50%.

En référence à la figure 5, seule la propriété manquante P1008 « Capacité de stockage énergétique » dépasse ce seuil TH. Le prompt PRP généré en S5 est donc unique et comprend par exemple la phrase en langage naturel du type : « « Quelle est la valeur de la propriété « Capacité de stockage énergétique » pour l'entité « Iphone 6S « ? Donne uniquement la valeur trouvée. ». Le prompt PRP est alors soumis en S6 au modèle de langage LNT qui génère en S7 la valeur V « 1715 (mAh) ».

On décrit maintenant en référence à la figure 6, une phase d'enrichissement du graphe de connaissances GC, selon un mode de réalisation de l'invention. Une telle phase peut être mise en œuvre à l'issue de l'étape S8 de restitution de la valeur V, telle que représentée à la figure 3A.

Cette phase d'enrichissement comprend :
- une étape ST1 de validation ou de non-validation par l'utilisateur UT, de la valeur V restituée en S8, à l'aide de l'interface IU précitée,
- dans le cas où la valeur V est validée (O sur la figure 6), une étape ST2 d'ajout dans le graphe de connaissances GC, par le module ADD du dispositif informatique DI, de la valeur V, en association avec l'entité ENT pour laquelle l'utilisateur UT a demandé des informations à l'étape S1a de la figure 3A.

Dans le cas où la valeur V n'est pas validée (N sur la figure 6), il est mis fin au procédé de communication. Le graphe de connaissances GC ne sera donc pas enrichi de la valeur V pour l'entité ENT.

On décrit maintenant, en relation avec la figure 3B, ensemble les figures 1 et 2, le déroulement d'un procédé de communication avec le dispositif informatique DI, selon un second mode de réalisation particulier de l'invention.

Ce second mode de réalisation se distingue du premier mode en ce qu'il ne comprend pas les étapes optionnelles de paramétrage du seuil TH S01a, S01b, S02. Ce second mode de réalisation prévoit une autre façon optionnelle de générer un seuil TH de la fréquence d'observation, comme cela va être décrit ci-dessous. Contrairement au mode de réalisation de la figure 3A où le seuil TH est déterminé préalablement à la mise en œuvre du procédé de communication, dans ce second mode de réalisation, le seuil TH peut être déterminé dynamiquement, à la volée, au cours du procédé de communication.

Le procédé de communication, selon le second mode de réalisation, comprend des étapes S'1a à S'4 identiques aux étapes S1a à S4 de la figure 3A. Pour cette raison, elles ne seront pas décrites à nouveau.

A l'issue de l'étape S'4, au cours d'une étape optionnelle S'5a, l'utilisateur UT envoie une requête REQ4 au dispositif informatique DI, via l'interface IU, ladite requête REQ4 contenant le seuil TH. Cette requête est reçue en S'5b par le dispositif informatique DI, via son module COM.

Les étapes suivantes S'6 à S'9 sont identiques aux étapes S5 à S8 de la figure 3A. Pour cette raison, elles ne seront pas décrites à nouveau.

A l'issue de l'étape S'9, la phase d'enrichissement représentée à la figure 6 peut être mise en œuvre.

Le procédé de communication qui vient d'être décrit ci-dessus permet notamment de limiter l'intervention de contributeurs humains dans l'alimentation d'un graphe de connaissances en intégrant dans la chaîne de construction un module d'IA (Intelligence artificielle) générative en mesure de générer de nouvelles connaissances. Les utilisateurs peuvent ainsi s'appuyer, au travers d'une application adaptée, sur une technologie d'intelligence artificielle générative pour proposer du contenu pertinent afin d'enrichir des entités du graphe de connaissances. Ce procédé permet également d'utiliser avec parcimonie le module d'IA générative en limitant les opérations d'inférence qui représente un coût significatif tant d'un point de vue financier qu'environnemental. L'invention est applicable pour tout domaine nécessitant la construction d'un graphe de connaissances.

## Revendications

1. Procédé de communication avec un dispositif informatique (DI) comprenant une base de connaissances (BC) modélisant des données sous la forme d'un graphe de connaissances (GC), ledit procédé comprenant ce qui suit, au niveau dudit dispositif :
- recevoir (S3b ; S'3b) une requête (REQ2) demandant au moins une propriété manquante d'une entité dudit graphe, parmi des informations relatives à ladite entité et précédemment envoyées dans une page Web (P1),
- commander (S4 ; S'4) la restitution d'une page Web (P2) contenant une liste (LP) de propriétés manquantes classées par fréquence d'observation de ces propriétés pour d'autres entités du même type,
- interroger (S5-S7 ; S'6-S'8) un modèle de langage (LNT), à partir d'un prompt (PRP) généré en langage naturel par ledit dispositif, ledit prompt demandant au modèle de langage quelle est la valeur (V) d'au moins une des propriétés de la liste,
- commander (S8 ; S'9) la restitution d'une page Web (P3) contenant ladite valeur.

2. Procédé de communication selon la revendication 1, dans lequel ledit prompt est généré pour un nombre de propriétés de ladite liste qui est déterminé par rapport à un seuil (TH) de fréquence d'observation de ces propriétés dans la base de connaissances, pour au moins une autre entité du même type que ladite entité.

3. Procédé de de communication selon la revendication 2, dans lequel ledit seuil (TH) de fréquence d'observation est défini (S01a-S02) préalablement à la mise en œuvre du procédé de communication ou est contenu dans une autre requête (REQ3) reçue (S'5b) par ledit dispositif, en réponse à la restitution (S'4) de la page Web contenant la liste de propriétés manquantes.

4. Procédé de communication selon l'une quelconque des revendications 1 à 3, comprenant ce qui suit :
- recevoir (ST1) une sélection d'une validation ou d'une non-validation de ladite valeur (V) contenue dans la page Web restituée à l'aide d'une interface homme-machine,
- ajouter (ST2) ladite valeur au graphe de connaissances, en association avec ladite entité, si la validation de la valeur est demandée.

5. Procédé de communication selon l'une quelconque des revendications 1 à 4, dans lequel ladite valeur (V) est relative à une propriété de données ou à une propriété d'objet.

6. Dispositif informatique (DI) comprenant une base de connaissances modélisant des données sous la forme d'un graphe de connaissances, le dispositif étant **caractérisé en ce qu'**il est configuré pour mettre en œuvre :
- une réception d'une requête demandant au moins une propriété manquante d'une entité dudit graphe, parmi des informations relatives à ladite entité et précédemment envoyées dans une page Web (P1),
- une commande de la restitution d'une page Web contenant une liste de propriétés manquantes classées par fréquence d'observation de ces propriétés pour d'autres entités du même type,
- une interrogation d'un modèle de langage, à partir d'un prompt généré en langage naturel par ledit dispositif, ledit prompt demandant au modèle de langage quelle est la valeur d'au moins une des propriétés de la liste,
- une commande de la restitution d'une page Web contenant ladite valeur.

7. Programme d'ordinateur comportant des instructions de code de programme pour la mise en œuvre du procédé de communication selon l'une quelconque des revendications 1 à 5, lorsqu'il est exécuté sur un ordinateur.

8. Support d'informations lisible par un ordinateur, et comportant des instructions d'un programme d'ordinateur selon la revendication 7.
